# EUROPÄISCHE PATENTSCHRIFT

(11) **EP 1 018 053 B1**
(45) Veröffentlichungstag und Bekanntmachung des Hinweises auf die Patenterteilung: **05.11.2003**
(21) Anmeldenummer: 98956776.3
(22) Anmeldetag: 17.09.1998
(51) Int. Cl.: G02B 6/42, G02B 6/122, G02B 6/136, G02B 3/00

(54) **OPTISCHES SYSTEM ZUM EINKOPPELN VON LASERSTRAHLUNG IN EINEN LICHTWELLENLEITER UND VERFAHREN ZU DESSEN HERSTELLUNG**
OPTICAL SYSTEM FOR INJECTING LASER RADIATION INTO AN OPTICAL FIBRE AND METHOD FOR MAKING SAME
SYSTEME OPTIQUE D'INJECTION D'UN RAYONNEMENT LASER DANS UNE FIBRE OPTIQUE ET SON PROCEDE DE FABRICATION

(30) Priorität: 22.09.1997 DE 19741702
(43) Veröffentlichungstag der Anmeldung: 12.07.2000
(73) Patentinhaber: Infineon Technologies AG, 81669 München (DE)
(72) Erfinder: ALTHAUS, Hans-Ludwig, D-93138 Lappersdorf (DE); KUHN, Gerhard, D-93096 Köfering (DE)
(74) Vertreter: Maikowski, Michael, Dipl.-Ing. Dr.
(86) Internationale Anmeldenummer: DE9802767
(87) Internationale Veröffentlichungsnummer: WO99015926

(56) Entgegenhaltungen:
- EP-A- 0 425 858
- DE-A- 3 634 187
- US-A- 5 316 640
- US-A- 5 633 527
- PATENT ABSTRACTS OF JAPAN vol. 011, no. 099 (E-493), 27. März 1987 & JP 61 248490 A (HITACHI LTD), 5. November 1986
- PATENT ABSTRACTS OF JAPAN vol. 014, no. 352 (P-1085), 30. Juli 1990 & JP 02 127605 A (TOSHIBA CORP), 16. Mai 1990

## Beschreibung

Die Erfindung bezieht sich auf ein optisches System nach dem Oberbegriff des Anspruchs 1 sowie ein Verfahren zur Herstellung einer Mehrzahl von plankonvexen Sammellinsen, die in einem derartigen optischen System zum Einsatz kommen können.

In der optischen Nachrichtenübertragung ist es erforderlich, Strahlung von Halbleiterlaseremittern, die meist stark divergente Strahlenbündel aussenden, in Lichtwellenleiter, wie beispielsweise Lichtleitfasern, einzukoppeln. Weiterhin ist die einzukoppelnde Leistung an die Anforderungen verschiedener Übertragungssysteme und Standards anzupassen.

Bei bekannten Lasermodulen für die Nachrichtenübertragungstechnik (man vergleiche z. B. DE 41 33 220) wird dem Laseremitter eine Kugel-, Bikonvex- oder Plankonvexlinse nachgeordnet, die das stark divergente Strahlenbündel zu einem konvergenten Strahlenbündel umformt. Um die gewünschte Strahlungsleistung in den Lichtwellenleiter einzukoppeln, muß dieser in allen drei Raumrichtungen justiert werden. Diese Systeme erfordern daher insbesondere wegen der aufwendigen Justage in z-Richtung einen sehr hohen Montageaufwand. Darüber hinaus treten bei diesen System häufig mechanische Instabilitäten auf.

Ein weiterer Nachteil der bekannten optischen Systeme der eingangs genannten Art besteht darin, daß ein Austreten der nicht in den Lichtwellenleiter eingekoppelten Laserstrahlung aus dem entsprechenden Bauelement durch zusätzliche technische Mittel verhindert werden muß.

In der den nächstliegenden Stand der Technik repräsentierenden europäischen Patentanmeldung EP 0 566 341 A1 ist eine Steckereinrichtung zum Verbinden einer Laserdiode mit einer optischen Lichtleitfaser beschrieben. Die Steckereinrichtung umfasst eine im Strahlengang eintrittsseitig angeordnete plankonvexe Linse, eine hiner der Linse angeordnete Blendenscheibe und ein lichtaustrittseitig vorgesehenes optisches Verbindungselement. Linse, Blendenscheibe und optisches Verbindungselement befinden sich aus Gründen der gegenseitigen Ausrichtung in einer gemeinsamen Buchse und sind an ihren Berührungsflächen mit einem transparenten Klebstoff verklebt.

Der vorliegenden Erfindung liegt die Aufgabe zugrunde, ein optisches System der eingangs genannten Art zur Verfügung zu stellen, das eine einfache Justage der optischen Einrichtung erlaubt. Ziel war insbesondere, ein optisches System zu schaffen, mit dem auf einfache Weise die in die optische Einrichtung (Lichtwellenleiter) einzukoppelnde Strahlungsleistung variierbar ist. Darüber hnaus soll ein besonders einfaches Verfahren zum Herstellen eines solchen optischen Systems angegeben werden.

Diese Aufgabe wird durch das in Anspruch 8 angegebene Verfahren zum Herstellen eines optischen Systems angegeben.

In einem solchen optischen System ist die Sammellinse mit einer strukturierten Beschichtung in Form einer Blende (z. B. Loch- oder Zonenblende) zum Ausblenden eines Teiles der vom Halbleiterlaseremitter ausgesandten Laserstrahlung versehen. Dadurch wird erreicht, dass die Sammellinse nur noch den Teil des von dem Halbleiterlaseremitter ausgesandten Laserstrahlenbündels durchlässt, der in den Lichtwellenleiter eingekoppelt werden soll.

Durch Ausblenden der Laserstrahlung mit hohem Divergenzwinkel wird vorteilhafterweise die Qualität des Fokus der Sammellinse verbessert. Ein wesentlicher Vorteil des erfindungsgemäßen optischen Systems besteht insbesondere darin, dass der Teil des von dem Halbleiterlaseremitter ausgesandten Strahlenbündels, der sowieso nicht in den Lichtwellenleiter eingekoppelt wird, ausgeblendet ist. Damit erreichen Receptacle-Bauelemente vorteilhafterweise dieselbe Augensicherheit wie Pigtail-Bauelemente.

Bevorzugt besteht die strukturierte Beschichtung (Blende) aus Metall, das sich auf einfache Weise mittels Aufdampfen auf die Oberfläche der Samellinse aufbringen lässt. Die Sammellinse kann aus Glas, aus Silizium oder aus einem anderen für die jeweilige Wellenlänge der Laserstrahlung durchlässigen Halbleitermaterial bestehen. Besonders bevorzugt ist die Sammellinse eine Plankonvexlinse, von der die konvexe Seite mit der strukturierten Beschichtung versehen ist.

Die strukturierte Beschichtung ist bevorzugt als Lochblende ausgebildet und blendet denjenigen Teil der Laserstrahlung aus, dessen Divergenzwinkel größer als der Akzeptanzwinkel des Lichtwellenleiters ist. Durch Variation des Divergenzwinkels unterhalb des Wertes des Akzeptanzwinkels wird die in den Lichtwellenleiter eingekoppelte Strahlungsleistung variiert, ohne die geometrische Anordnung des gesamten Systems Halbleiterlaseremittter/Sammellinse/Lichtwellenleiter zu verändern.

Ist die strukturierte Beschichtung als Zonenblende ausgeführt, wird der intensitätsreiche Zentralstrahl ausgeblendet. Damit reduziert sich die eingekoppelte Leistung und erhöht sich die Augensicherheit bei Receptacle-Bauformen.

Das optische System kann vorteilhafterweise zur Einkopplung des Laserstrahlenbündels eines Halbleiterlaseremitters in eine Multimodefaser verwendet werden, bei der durch Ausblendung der Laserstrahlung mit großem Divergenzwinkel lediglich der Grundmodus angeregt wird. Dadurch wird in der Multimodefaser das Übertragungsverhalten einer Singlemode-Faser simuliert.

Bei dem erfindungsgemäßen Verfahren zum Herstellen einer Mehrzahl von plankonvexen Sammellinsen wird zunächst eine Si-Scheibe hergestellt, die auf einer ersten Hauptfläche mittels Fototechnik und Ätzen mit einer Mehrzahl von konvexen Erhebungen versehen wird. Nachfolgend wird auf die erste Hauptfläche eine Metallschicht aufgebracht, die dann wiederum mittels Fototechnik und Ätzen derart strukturiert wird, dass auf den konvexen Erhebungen rigförmige Lochblenden oder scheibenförmige Zonenblenden verbleiben. Die Si-Scheibe wird dann, nachdem sie beispielsweise mit ihrer zweiten Hauptfläche auf eine Klebefolie aufgeklebt wurde, z. B. mittels Sägen oder Trennschleifen zu einzelnen plankonvexen Sammellinsen mit Lochblende bzw. Zonenblende zertrennt.

Das optische System ist nicht auf die Verwendung zur Einkopplung von Laserstrahlen in eine Lichtleitfaser eingeschränkt. Es kann in jeglicher Vorrichtung zum Einsatz gebracht werden, bei der nur ein Teil eines zur Verfügung stehenden Laserstrahlenbündels in eine optische Einrichtung eingekoppelt werden soll.

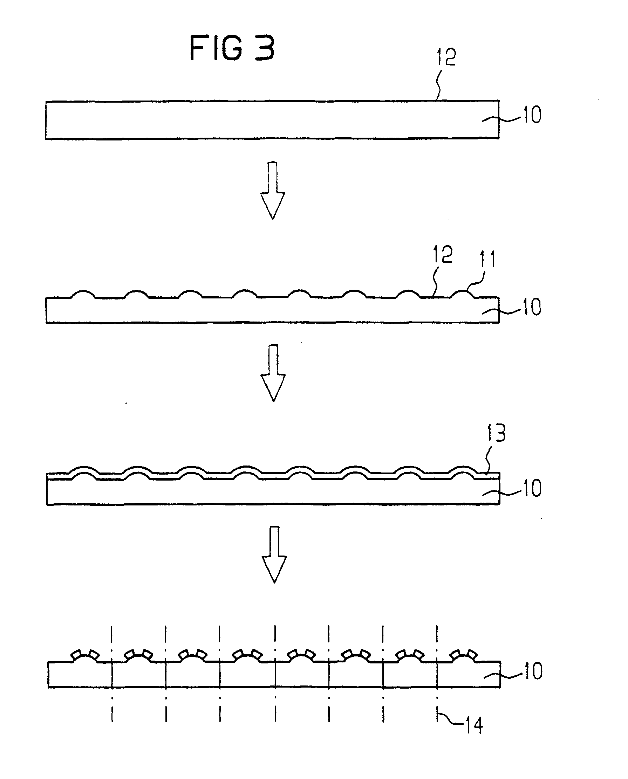

Das optische System und das Verfahren zu dessen Herstellung wird im Folgenden anhand von zwei Ausführungsbeispielen in Verbindung mit den Figuren 1 bis 3 näher erläutert. Es zeigen:
Figur 1 eine schematische Darstellung einer Schnittansicht durch das erste Ausführungsbeispiel mit Strahlengang,
Figur 2 eine schematische Darstellung einer Schnittansicht durch das zweite Ausführungsbeispiel mit Strahlengang und
Figur 3 eine schematische Darstellung des Verfahrens zum Herstellen einer Mehrzahl von optischen Systemen gemäß dem Ausführungsbeispiel.

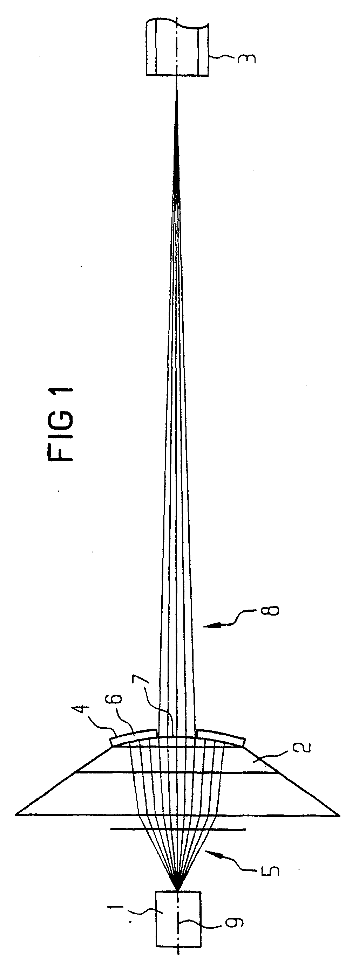

Bei dem Ausführungsbeispiel von Figur 1 ist eine Sammellinse 2 in Form einer sphärischen oder asphärischen Silizium-Plankonvexlinse zwischen einem Halbleiterlaseremitter 1 und einem Lichtwellenleiter 3, in diesem Fall eine Lichtleitfaser, angeordnet. Die Plankonvexlinse 2 ist auf ihrer gekrümmten Oberfläche 7 mit einer Lochblende 4 versehen, die aus einer metallischen Schicht 6 (z. B. Al) besteht. Diese Lochblende 4 blendet einen Randbereich des von dem Halbleiterlaseremitter 1 ausgesandten stark divergenten Laserstrahlenbündels 5 aus, läßt nur einen Mittenbereich des Laserstrahlenbündels 5 um dessen Strahlachse 9 herum passieren und formt diesen zu einem konvergenten Laserstrahlenbündel 8 um. Nur dieser Teil der Laserstrahlung 5 wird in die Lichtleitfaser 3 eingekoppelt.

Die Lochblende ist insbesondere so bemessen, dass der Konvergenzwinkel (oder nach Durchlaufen des Fokus wieder der Divergenzwinkel) der einzukoppelnden Strahlung gleich oder kleiner als der Akzeptanzwinkel der Lichtleitfaser ist. Damit wird erreicht, dass durch die Blende 4 der Teil der Laserstrahlung 5 ausgeblendet ist, der sowieso nicht in die Lichtleitfaser 3 eingekoppelt wird.

Das optische System von Figur 1 kann zur Einkopplung von Laserstrahlung 5 in eine Multimodefaser als Lichtwellenleiter 3 verwendet werden. Durch Ausblenden der Laserstrahlung mit großem Divergenzwinkel kann erreicht werden, dass lediglich der Grundmodus angeregt wird. Dadurch wird in der Mulitmodefaser das Übertragungsverhalten einer Singlemode-Faser simuliert.

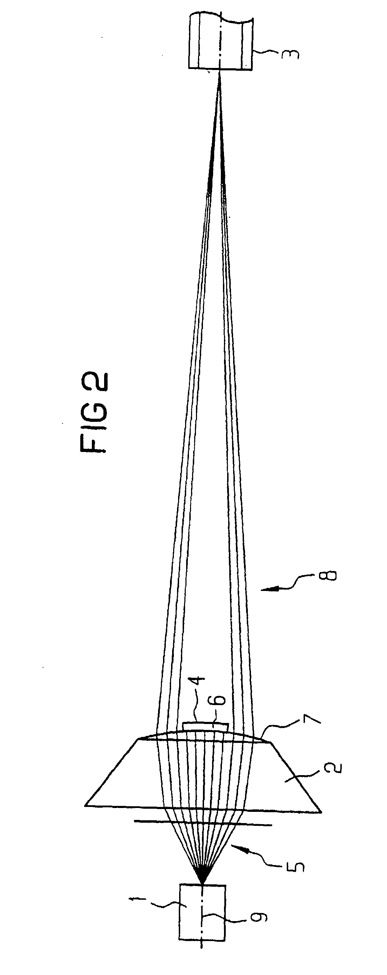

Das Ausführungsbeispiel von Figur 2 unterscheidet sich von dem der Figur 1 im Wesentlichen dadurch, daß an Stelle der Lochblende 4 eine scheibenförmige Zonenblende 4' vorgesehen ist, die wiederum aus einer metallischen Schicht 6' besteht. Diese Zonenblende blendet den intensitätsreichen Zentralstrahl des vom Halbleiterlaseremitter 1 ausgesandten Laserstrahlenbündels 5 aus.

Das in Figur 2 schematisch dargestellte Verfahren zum Herstellen einer Mehrzahl von plankonvexen Sammellinsen 2, bestehend aus Silizium, bei denen auf die konvexe Seite 7 eine Lochblende 4 aufgebracht ist, weist folgende Verfahrensschritte auf:
a) Herstellen einer Si-Scheibe 10,
b) Herstellen einer Mehrzahl von konvexen Erhebungen 11 auf einer ersten Hauptfläche 12 der Si-Scheibe 10 mittels Fototechnik und Ätzen,
c) Aufbringen einer Metallschicht 13 auf die gesamte erste Hauptfläche 12,
d) Strukturieren der Metallschicht 13 mittels Fototechnik und Ätzen, derart, daß auf jeder konvexen Erhebung 11 eine Lochblend 4 verbleibt, und
e) Zertrennen der Si-Scheibe zwischen den konvexen Erhebungen 11 entlang von Trennlinien 14 zu einzelnen plankonvexen Sammellinsen 2 mit Lochblende 4.

Die Herstellung einer Mehrzahl von plankonvexen Sammellinsen 2 mit Zonenblenden 4' erfolgt beispielsweise nach einem analogen Verfahren.

### Bezugszeichenliste

- 1: Halbleiterlaseremitter
- 2: Sammellinse
- 3: Lichtwellenleiters
- 4: Blende
- 5: Laserstrahlung
- 6: Aufdampfschicht
- 7: konvexe Seite
- 8: konvergentes Strahlenbündel
- 9: Strahlachse
- 10: Halbleiterscheibe
- 11: konvexe Erhebung
- 12: Hauptfläche
- 13: Metallschicht
- 14: Trennlinie

## Patentansprüche

1. Verfahren zum Herstellen einer Mehrzahl von plankonvexen Sammellinsen (2), bestehend aus einem Halbleitermaterial, bei denen auf die konvexe Seite (7) eine Blende (4) aufgebracht ist, mit den Verfahrensschritten:
a) Herstellen einer Halbleiterscheibe (10),
b) Herstellen einer Mehrzahl von konvexen Erhebungen (11) auf einer ersten Hauptfläche (12) der Halbleiterscheibe (10) mittels Fototechnik und Ätzen,
c) Aufbringen einer Metallschicht (13) auf gesamte erste Hauptfläche (12),
d) Strukturieren der Metallschicht (13) mittels Fototechnik und Ätzen, derart, daß auf jeder konvexen Erhebung (11) eine Blende (4) verbleibt, und
e) Zertrennen der Halbleiterscheibe (10) zwischen den konvexen Erhebungen (11) zu einzelnen plankonvexen Sammellinsen (2) mit Blende (4).

## Claims

1. Method for producing a plurality of plano-convex convergence lenses (2), composed of a semiconductor material, in which a diaphragm (4) is applied to the convex side (7), having the method steps:
a) production of a semiconductor wafer (10),
b) production of a plurality of convex projections (11) on a first main surface (12) of the semiconductor wafer (10) by means of a photographic technique and etching,
c) application of a metal layer (13) to the entire first main surface (12),
d) structuring of the metal layer (13) by means of a photographic technique and etching, in such a manner that a diaphragm (4) remains on each convex projection (11), and
e) slicing through the semiconductor wafer (10) between the convex projections (11) to form individual plano-convex convergence lenses (2) with a diaphragm (4).

## Revendications

1. Procédé de fabrication d'une multiplicité de lentilles (2) convergentes plans convexes en un matériau semi-conducteur, dans lesquelles un diaphragme (4) est déposé sur la face (7) convexe, comprenant les stades de procédé qui consistent :
a) à fabriquer une tranche (10) semiconductrice,
b) à ménager une pluralité de surélévations (11) convexes sur une première surface (12) principale de la tranche (10) semiconductrice au moyen d'une technique photographique et d'une attaque,
c) à déposer une couche (13) métallique sur toute la première surface (12) principale,
d) à structurer la couche (13) métallique au moyen d'une technique photographique et d'une attaque de façon à ce qu'il reste un diaphragme (4) sur chaque surélévation (11) convexe, et
e) à séparer la tranche (10) semiconductrice entre les surélévations (11) convexes en des lentilles (2) collectrices plans convexes individuelles à diaphragme (4).
